(19) Europäisches Patentamt
European Patent Office
Office européen des brevets

(11) **EP 3 331 149 A1**

(12) **EUROPEAN PATENT APPLICATION**

(43) Date of publication:
**06.06.2018 Bulletin 2018/23**

(51) Int Cl.:
***H02N 2/18*** *(2006.01)*     ***F28D 15/02*** *(2006.01)*

(21) Application number: **16202050.7**

(22) Date of filing: **02.12.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Blunergy SA**
**1091 Bourg-en-Lavaux (CH)**

(72) Inventors:
  • **BORHANI, Navid**
    **1094 Paudex (CH)**

  • **SOLIGNAC, Dominique**
    **1305 Penthalaz (CH)**
  • **KAEUPER, Peter**
    **1003 Lausanne (CH)**
  • **MOSSIER, Evan**
    **1004 Lausanne (CH)**
  • **ROSSI, Nathanaël**
    **1110 Morges (CH)**

(74) Representative: **Schneiter, Sorin**
**Schneiter & Vuille**
**IP Partners**
**Ch. de Champ-Colomb 7B**
**1024 Ecublens (CH)**

(54) **THERMOELECTRIC GENERATOR**

(57)    The present invention is a novel thermoelectric generator which can provide simultaneous cooling of a heat source. It comprises a pulsating heat pipe heat exchanger with integrated piezoelectric elements such as beams and membranes. When the pulsating heat pipe is operating in its oscillating flow regime, the resulting fluctuating pressure field will result in a time dependent strain of the piezoelectric elements, thus generating an electrical voltage which can be harvested.

**Figure 1 A**

EP 3 331 149 A1

## Description

## Technical Field

The present invention relates to an electricity generating device, in particular a thermoelectric generator (TEG), to the use an electricity generating element such as a piezoelectric element in and/or with a heat exchanger, and to a method of generating electric energy from thermal energy and/or kinetic energy of a moving fluid.

## Background Art, Problems and Goals to be Achieved by the Invention

The ongoing rapid development of mobile electronics has resulted in ever greater miniaturisation of such devices in order to produce smaller and lighter units and/or the addition of further features which need extra electrical power for their operation. However, these trends are in direct contradiction with the need to maintain a sufficient battery size to ensure long autonomous operational lives without the need for recharging or replacing the batteries.

Apart from the development of new battery technologies and more power efficient electronics, one solution to this problem is to use passive energy harvesting techniques, where energy from the normal operation of the device or its environment is recycled into electrical energy for either storage or direct reuse. This will then allow further miniaturisation due to the need for smaller batteries, and the development of more autonomous devices with reduced maintenance and operational costs.

Related to the miniaturisation trend are the ever increasing heat fluxes dissipated by solid state electronics such as microprocessors, light emitting diodes, laser diodes and insulated-gate bipolar transistors during their operation. This waste heat, generated by Joule heating, must be efficiently removed from these elements to prevent their temperature from exceeding their operational limits, thus preventing burnout and failure of the equipment.

Of the possible cooling strategies available for low heat flux cooling applications, pulsating (oscillating) heat pipe heat exchangers are an application of the present invention; see the patent of Akachi (US 5,219,020) and the review paper of Han et al. (Review of the development of pulsating heat pipe for heat dissipation; Renewable and Sustainable Energy Reviews 59 (2016) 692-709). The closed internal volume of these two-phase fluid heat exchangers comprise open or closed loop networks of microchannels or capillary tubes, as well as other structures such as manifolds, baffles (channel walls), check valves, pin fins, and artificial bubble nucleation sites. The heat exchanger is typically made up of three thermal zones: a heated evaporator zone, a cooled condenser zone, and an adiabatic zone.

The internal volume of a pulsating heat pipe is partially filled under a vacuum with a working fluid before being hermetically sealed. Possible coolants include water, hydrocarbons, refrigerants, and colloidal suspensions such as nano-fluids. Once partially filled, capillary surface tension forces cause the liquid volume to become segmented around the microchannel network, thus resulting in a sequence of liquid slugs and vapour bubbles along the channel axes. For wettable combinations of liquids and solid surfaces, these bubbles consist of vapour cores surrounded by thin liquid films that wet the channel walls.

A given pulsating heat pipe has different operating two-phase flow regimes depending on the applied heat load. For low heat loads, a time periodic state can be achieved known as the oscillating flow regime. As the evaporator section is heated in this regime, heat is conducted and convected into the liquid film surrounding the resident vapour bubbles. The resulting evaporation of this liquid film has several consequences: Firstly, the latent heat of vaporisation greatly increases the local heat transfer rate thus leading to greater cooling performance. Secondly, the increase in vapour pressure inside the confined bubble leads to an increase in its volume and thus a rapid increase in its length along the channel axis. This causes the hot two-phase fluid ahead of the vapour bubble nose to become pushed into the cooled condenser region of the heat exchanger. As vapour bubbles enter the condenser section, the vapour is cooled and thus condenses back into the liquid film to release its transported heat as latent heat of condensation. The resulting decrease in the vapour pressure then causes a decrease in its volume and length. At higher input heat loads, vapour bubbles periodically nucleate on the walls of the evaporator section. These bubbles then detach from their nucleation sites and grow rapidly due to the evaporation of their liquid films, thus initiating further pulsatile two-phase flow dynamics in the heat exchanger.

The resulting periodic growth and contraction of the vapour bubbles caused by the above mechanisms results in the passive pulsatile pumping of the coolant around the heat exchanger, thus augmenting the cooling of the applied heat source. Furthermore, the oscillating vapour pressures inside these moving vapour bubbles result in fluctuating pressure and stress fields in the heat exchanger. The magnitude of these fluctuations is increased by the interaction of the vapour bubbles with the solid internal structures of the heat exchanger due to the surface tension of the curved liquid-vapour interfaces.

Since changes in the vapour bubble lengths, due to evaporation and condensation, are the dominant mechanisms for pumping fluid around the heat exchanger, gravitational buoyancy forces are of secondary importance. As a result of this, pulsating heat pipes can be designed to operate in any orientation and in low gravity environments.

The geometry, the choice of working fluid, and the volumetric filling ratio of the pulsating heat pipe depend sensitively on the application; namely the imposed heat fluxes, the orientation and area of the active areas, the operational temperature limits, and the material compatibility requirements. As a result of this interdependence, pulsating heat pipes need to be optimised for each application. However, they are simple sealed low-maintenance passive devices with no moving parts or externally powered pumps.

It is an objective of the present invention to produce electric energy from a heat source. It is an objective to produce electric energy from heat that is collected by cooling devices and installations such as phase change heat exchangers and/or pulsating heat pipes. It is an objective of the present invention to produce electric energy from waste heat dissipated by devices, installations and/or other products requiring cooling. For example, it is an objective to recover electric energy from the heat produced by electronic equipment and devices, such as portable computer devices, and so forth. The present invention encompasses the utilization of heat generated from any heat source, including heat generated by mammal animals or humans, for example.

It is an objective of the invention to provide a possibility of providing an additional source of electric energy, for example in wireless and/or portable products such as wireless and/or portable electronic or computer devices (smartwatches, smartphones, computer tablets, laptop computers). It is an objective of the invention to increase autonomy of wireless and/or portable devices.

It is an objective of the invention to provide a new thermoelectric generator (TEG), in particular a new type of TEG.

It is an objective of the invention to transform the kinetic and/or the mechanical energy of a moving and/or oscillating single phase and/or two-phase fluid into electric energy. In particular, it is an objective of the invention to transform kinetic and/or mechanical energy of a cooling fluid and/or any fluid in a heat exchanger into electric energy.

The present invention addresses the problems depicted above.

## Summary of the Invention

Remarkably, the present inventors provide a heat exchanger comprising electric energy generating elements, in particular one or more piezoelectric elements, for producing electric energy from the movement of a fluid in said heat exchanger.

In an aspect, the present invention provides a thermoelectric generator comprising a heat exchanger with integrated piezoelectric elements.

In an aspect, the invention provides a device comprising a lumen and a fluid arranged in said lumen so as to be able to circulate and/or oscillate, and so as to, upon circulation and/or oscillation, exchange heat, wherein said device further comprises an electricity generating element, which is arranged so as to generate electricity upon said circulation and/or oscillation.

In an aspect, the invention provides the use of an electricity generating element, such as a piezo element in a heat exchanger.

In an aspect, the invention provides a method for generating electric energy from thermal energy, the method comprising the steps of: providing an electricity generating element in a heat exchanger; and generating electricity by converting kinetic energy of a circulating and/or oscillating fluid of said heat exchanger into electric current and/or a voltage gradient.

In an aspect, the invention provides a device for converting thermal energy into electric energy, preferably for use in wearable, wireless and/or battery-dependent electronic device. In an aspect, the invention provides the use of the device of the invention for improving autonomy of such wearable, wireless and/or battery-driven devices.

In an embodiment, the device of the invention comprises fluid guiding and/or restricting elements providing inner surfaces in said device and/or of said lumen, which fluid guiding and/or restricting elements are preferably arranged such that a surface tension acting upon said fluid is larger than the force of gravity acting on said fluid.

In an embodiment of the device of the invention, said electricity generating element is arranged in said device so as to convert mechanical and/or kinetic energy of said circulating and/or oscillating fluid into electric energy.

In an embodiment of the device of the invention, said electricity generating element is a piezoelectric element.

In an embodiment, the device of the invention is a heat exchanger, preferably a pulsating heat pipe heat exchanger.

In an embodiment of the device of the invention, said fluid is arranged to be in contact with said electricity generating element.

In an embodiment, said electricity generating element provides inner surfaces of the device and/or contact surfaces of said liquid.

In an embodiment, said fluid is present as a two-phase fluid comprising preferably a liquid phase and a gaseous phase.

In an embodiment, said electricity generating element forms and/or is part of a fluid channelling element.

In an embodiment, the device of the invention comprises at least a first zone or heating zone and a second zone or cooling zone, wherein said fluid is arranged in said device so as to circulate and/or oscillate and to favour heat exchange between said first and second zones.

In an embodiment, said electric energy generating and/or piezoelectric element is in the form of one or more beams extending in said device and/or of a cover membrane providing a lateral, top or bottom cover and/or surface of the lumen.

In an embodiment, said heat exchanger is a pulsating heat pipe (PHP).

Further aspects and preferred embodiments of the invention are defined herein below and in the appended claims. Further features and advantages of the invention will become apparent to the skilled person from the description of the preferred embodiments given below.

**Brief Description of the Drawings**

Figures **1 A** and **1 B** schematically show the center plane and cross section, respectively, of a device according to a first embodiment of the invention.

Figures **2 A** and **2 B** schematically show the center plane and cross section, respectively, of a device according to a second embodiment of the invention.

Figure **3** schematically shows the center plane of a device according to a third embodiment of the invention.

Figure **4** schematically shows a section along line B-B in Figure 2 A.

Hereinafter, preferred embodiments of the device of the invention are described with reference to the drawings, in order to illustrate the invention, without any intention to limit the scope of the present invention.

**Detailed Description of the Preferred Embodiments**

In preferred embodiments, the present relation concerns a heat exchanger comprising electricity generating elements.

For the purpose of the present specification, the term "comprising" and its various grammatical forms is intended to mean "includes, amongst other". It is not intended to mean "consists only of".

In an embodiment, said heat exchanger is a two-phase heat exchanger. Preferably, said heat exchanger is a pulsating heat pipe heat exchanger, in particular a passive heat exchanger.

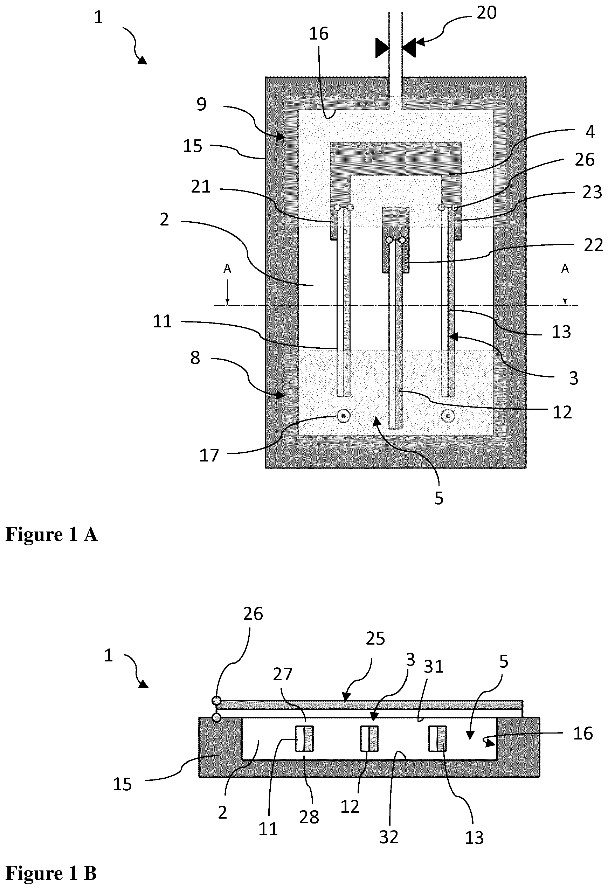

**Figure 1A** shows the centre plane of a flat plate closed loop pulsating heat pipe **1** with integrated piezoelectric elements **3** according to a preferred embodiment of the invention. The internal volume or lumen **5** of the pulsating heat pipe back plate **15** preferably comprises a serpentine network of microchannels **16**, baffles (channel walls) **4**, artificial bubble nucleation sites **17**, and fixed mounting points **21**, **22**, **23** for the piezoelectric beam elements **11**, **12**, **13**, respectively. These features can either be fabricated by subtractive techniques into the rigid back plate, by additive techniques on top of the back plate, or embossed on to the back plate, for example.

The heat exchanger is preferably fabricated from materials with a high thermal conductivity; these include metals, ceramics, polymers and composites. On a practical note, the thermal expansion coefficients of any materials used should be matched, thus preventing structural failure of the heat exchanger due to differential thermal expansion. The profile of the pulsating heat pipe back plate may also be curved such that it conforms to a curved diabatic surface, or fits within a restricted space in the attached system.

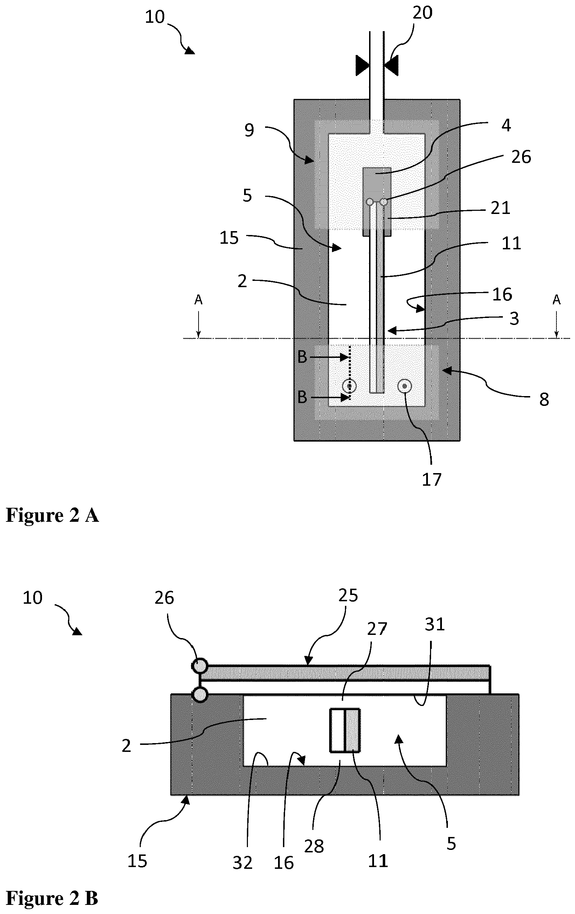

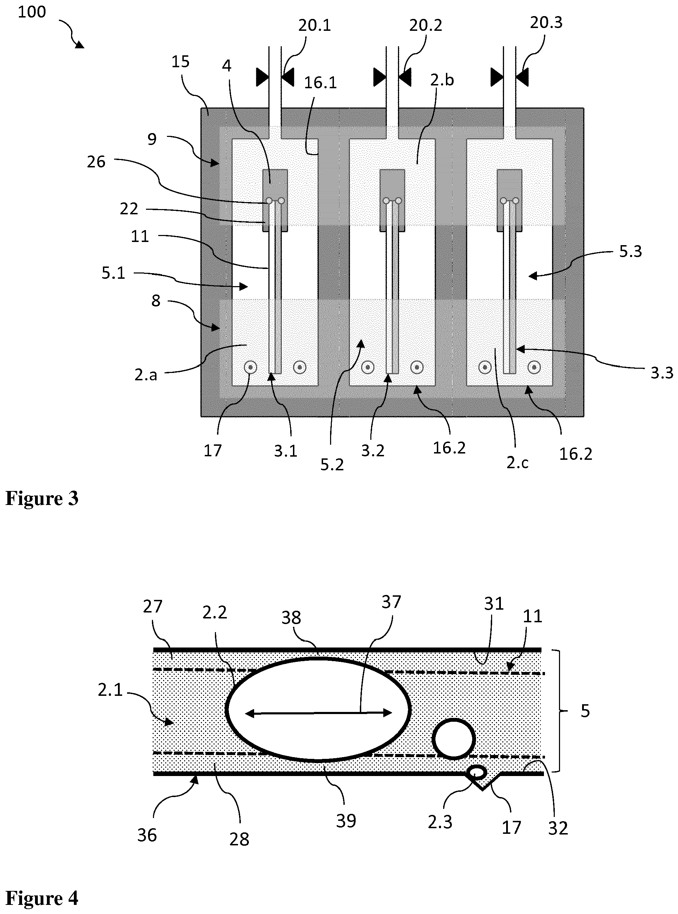

The pulsating heat pipe channels **16** may also be of open loop design, describe any path geometry, and contain any structural elements such as manifolds, check valves, and pin fins. For example, **Figures 2A** and **2B** depict a single turn closed loop pulsating heat pipe **10** geometry according to another embodiment of the invention. Furthermore, rather than a single loop covering most of the surface area of the heat exchanger, the design can comprise multiple isolated loops as can be seen in the device **100** shown in **Figure 3**, thus allowing the amount of harvested energy to be scaled and the spatial cooling performance of the heat exchanger to be optimised for a given application. In **Figure 3**, different reference numerals **2.a**, **2.b** and **2.c** are to show that, in the embodiment shown, the channel systems **16.1**, **16.2** and **16.3** do not communicate and/or the fluid does not move between the channel systems. Device **100** may be considered as a combination comprising three devices as shown in **Figures 2A** and **2B**. Of course, it is possible to integrate more than two, more than three heat exchanger units or even more than that (for example, more than 10) in one physical entity. The micro-channels **16** can be of any cross-sectional shape as long as their hydraulic diameter is sufficiently small for the surface tension capillary forces to dominate the two-phase fluid dynamics, thus forming confined vapour bubbles and allowing the operation of the pulsating heat pipe. This can be achieved by ensuring that the largest inner diameter $D_{crit}$ of all channels comprising circulating fluid **2** in the device and/or, in another embodiment, the average inner diameter of the channels in the device satisfies the following relationship:

$$D_{crit} \leq 2 \ (\sigma / (g \ (\rho_L - \rho_V))^{1/2},$$

where $\sigma$ is the liquid-vapour surface tension, $g$ is the gravitational acceleration, $\rho_L$ is the density of the liquid phase, and $\rho_V$ is the density of the vapour phase.

In an embodiment, the inner diameter of the channels of the heat pipe is $\leq 1$ cm, preferably $\leq 5$ mm, more preferably $\leq 3$ mm, even more preferably $\leq 2$ mm, and most preferably $\leq 1$ mm, for example $\leq 0.5$ mm. In an embodiment, the inner diameter of the channels of the heat pipe is $\leq 0.2$ mm.

The position of the nucleating vapour bubble **2.3** (shown in **Figure. 4**) on the channel walls can be controlled with artificial bubble nucleation sites **17**. These conical depressions on the walls effectively pin the location of the nucleating vapour bubbles, thus leading to more controllable and predictable dynamics of the diabatic two-phase flow. Furthermore, the bubble nucleation sites can be positioned at locations that maximise the interaction between the resulting vapour bubbles and the piezoelectric elements **3**, thus maximising the displacement of the piezoelectric elements.

The internal volume **5** of the pulsating heat pipe is preferably partially filled via a sealable inlet port **20** (**20.1**, **20.2**, **20.3** in **Figure 3**) with a suitable working fluid **2** under a vacuum and hermetically sealed. The strength of this seal is preferably sufficient to withstand the operating pressures in the device and the mechanical fatigue due to the cyclic pressure stresses. The working fluid then segments itself around the device to form a sequence of liquid slugs and confined vapour bubbles, **2.1** and **2.2** in **Figure 4** respectively. The internal surfaces of the micro-evaporator may also be functionalised to improve its wettability with the chosen working fluid, thus reducing the probability of dryout of the liquid film and critical heat flux condition at higher heat loads and vertical orientations.

The heat exchanger **1**, **10**, **100** preferably has heated **8**, cooled **9**, and adiabatic zones. Although single zones are shown, the device may be heated and cooled at multiple locations simultaneously across the device area. Furthermore, as well as on the top and bottom surfaces, the device may be cooled and heated along its edges. The imposed surface heat flux and surface temperature gradients then preferably passively drive the pulsatile pumping of the two-phase working fluid **2** around the device. The heat exchanger is preferably attached to the heat source with a high conductivity thermal interface material, thus minimising the contact resistance and reducing the wall temperature for a given heat load.

The pulsating heat pipe geometry and working fluid is preferably chosen such that the pulsating heat pipe operates in the oscillating flow regime for the given application, thus providing the maximum pressure fluctuation amplitudes which can then be harvested.

Piezoelectric elements **3**, such as beams **11**, **12** and **13**, are preferably used to harvest energy from the time dependent mechanical stresses occurring in the operating pulsating heat pipe. These stresses originate from the unsteady pressure and surface tension forces generated by nearby dynamic two-phase flow structures. The natural frequency of these piezoelectric elements, either unimorph or multimorph in nature, should be tuned to match the dominant local two-phase flow frequencies, thus optimising the energy conversion.

Although any geometry of piezoelectric elements can be used, either individually or in combination, two types are depicted in the preferred embodiment: Firstly, some of the channel walls and baffles **4** inside the heat exchanger volume comprise flexible piezoelectric beams **11**, **12**, **13** (**Figure 1**). These beams are preferably bonded at one end to fixed mounting points **21**, **22**, **23** with glue and/or interference fits.

The small gaps **27** and **28** in **Figure. 4**, between the two parallel dotted lines indicating the upper and lower edges of the beam **11** formed by the electricity generating element **3**. and the heat exchanger casing **15**, **25** ensures that they are free to deflect along their lengths under any applied stress without coming into contact with any other structures. The gaps **27**, **28** should be small enough that surface tension forces prevent the vapour bubbles **2.2** from passing over or under the beams. Furthermore, the gaps **27**, **28** are sufficiently small so as to not interfere substantially with the oscillating and/or otherwise movement of the fluid **2** as required for the heat exchanging function of the device. As the person skilled in the art will note, the gaps **27**, **28** may result in a "lateral" communication of fluid between adjacent channels of the channel system **16**, wherein "lateral" corresponds to "horizontal" in **Figures 1A**, **2A** and **3** and means perpendicular to the axis along the temperature difference. The latter axis is referred to as the "longitudinal" axis between heating and cooling zones, corresponding to the vertical in **Figures 1A**, **2A** and **3**. A lateral circulation is required and also provided by the channels in the heating and cooling zones **8**, **9**, which are oriented horizontally at the top and bottom of the channel systems **16**, **16.1**, **16.2** and **16.3** of the devices shown in **Figures** 1-**3**. However, the lateral movement of the liquid is less favourable in the adiabatic zones, as it does generally not contribute substantially to the heat exchange. Therefore, in order not to diminish substantially the heat exchange properties, said gaps **27**, **28** and the properties of the fluid (viscosity, surface tension, etc) are preferably selected and/or adjusted so as to minimize the said lateral or undesired fluid transfer, in particular in adiabatic zones. As can be seen from **Figure 4**, large bubbles **2.2** tend to expand and/or shrink along the directions indicated with arrow **37**, thereby causing the oscillation and/or circulation of the fluid **2** in the corresponding, same overall or main direction as indicated with arrow **37**.

As shown in **Figure 1B**, inner surfaces may be provided by the plate **15**, the cover plate or the piezo membrane **25**. For example, the device shown in **Figure 1B** has a bottom inner surface **32** provided by the inner bottom surface of the plate **15** and a top inner surface **31** provided by the cover plate or membrane **25**, which, in this case, is also a piezoelectric element suitable to produce electric energy. The piezoelectric beams **11-13** are mounted such that gaps **27**, **28** are formed between the inner top and bottom surfaces **31**, **32**. The gaps **27**, **28** are preferably small enough not to interfere, disturb or hamper the oscillating, pulsating or other motion conducted by the two-phase fluid **2** required for the heat exchange function of the device. One purpose of the gaps is preferably to avoid friction between the piezoelectric elements and inner surfaces of the heat exchanger. "Inner surfaces", for the purpose of the present specification, are preferably surfaces that are in contact with the fluid. The baffles and/or internal channels walls **4** preferably also provide inner surfaces of the device contributing to the disposition of channels. The beams **11-13** in principle also provide inner surfaces of the device, as they are also in contact with the fluid. As the skilled person will understand, the statement above with respect to the avoidance of friction preferably relates to friction between the piezoelectric beams **11-13** and other inner surfaces, such as the top and bottom surfaces **31** and **32** and/or inner surfaces **16**, including lateral surfaces, provided by the plate **15**. Preferably, the piezoelectric elements **11-13** and/or **25** contribute to the formation of the microchannels in the device. Preferably, the piezoelectric elements form one or more of the inner surfaces, (fluid-)channel delimiting walls and/or channel walls, or part of the latter, in the device of the invention. Preferably, the piezoelectric elements are arranged in said device such as to be deformed and/or bent due to and/or upon the motion of the fluid during the heat exchange operation. In particular, the piezoelectric elements are preferably arranged so as to produce an electric potential as a result of mechanical interaction with the fluid **2**, including the liquid and/or gaseous bubbles **2.1**, **2.2**, on the piezoelectric elements.

Piezoelectric elements **11**, **12**, **13, 25** can be positioned at any location or orientation in the heat exchanger, however, for best results these should correspond to areas where the amplitude of the fluctuating stresses are highest. For example, a piezoelectric membrane **25** can be hermetically bonded around the perimeter of the heat exchanger, thus allowing it to become deflected by pressure fluctuations within the pulsating heat pipe volume **5**. In an embodiment, a solid cover plate may be hermetically bonded to the heat exchanger instead of this piezoelectric membrane **25**.

Electric contacts **26** are fabricated in the device to allow the generated voltage from each piezoelectric element to be harvested. This voltage is then conditioned and rectified for further use. In order to prevent electrical cross-talk between the piezoelectric elements, their electrical connections must be isolated. Furthermore, in a preferred embodiment, the working fluid **2** is a dielectric.

**Figure 4** illustrates the fluid **2** in a heating zone **9** of the device **1**, **10**, **100** of the invention. For example, the section of a heat pipe shown in **Figure 4** may typically correspond to the section B-B in **Figure 1A**. The fluid **2** is preferably a two-phase fluid. Preferably, the fluid comprises a liquid phase **2.1** and a gaseous phase **2.2**. The gaseous phase preferably exists in the form of bubbles **2.2**, **2.3**, which are formed and/or which increase in size (arrow **37**) in the heating zone **9**. For example, due to the heat produced and/or emitted by a heat producing entity (not shown), such as an electronic device and/or a mammal or human, or any other heat generating entity. The liquid phase **2.1** evaporates to form vapour bubbles. Small bubbles **2.3** that typically nucleate on an inner surface of the channels, for example on the bottom surface **32** or from a nucleation site **17**, grow and generally merge with pre-existing bubbles **2.2** or with other newly formed bubbles, thereby causing the fluid to displace, for example to oscillate, pulsate and/or circulate inside the lumen **5** formed by the channel system **16**.

**Figure 4** also illustrates the presence of liquid films **38** around the vapour bubbles **2.2**. Preferably, the gaseous phase **2.2**, **2.3** does not enter for a consistent and/or long time in direct contact with the inner surfaces. Furthermore, in a preferred embodiment, the properties of the working fluid are chosen to ensure wetting of the inner surfaces of the lumen **5** by the liquid **2.1**.

In some embodiments, the present invention provides the integration of piezoelectric elements into a pulsating heat pipe heat exchanger for energy harvesting.

In some embodiments, the present invention provides the integration of a piezoelectric membrane into the casing of a pulsating heat pipe heat exchanger for energy harvesting.

In some embodiments, the present invention provides a rigid device conforming to a curved surface.

In an embodiment, the device of the invention is a sealed device, preferably a passive device. Preferably, the device is a low-maintenance device. Preferably, the device is free of moving parts or externally powered pumps.

In an embodiment, the device of the invention transforms the kinetic and/or the mechanical energy of a moving and/or oscillating single phase and/or two-phase fluid into electric energy.

In an embodiment, the device of the invention transforms the kinetic and/or the mechanical energy of a cooling fluid and/or any fluid in a heat exchanger into electric energy.

In an embodiment, said heat that is exchanged by the heat exchanger may be waste heat.

In an embodiment, the device of the invention is suitable to provide an additional source of electric energy, for example in wireless and/or portable products such as wireless and/or portable electronic or computer devices (smartwatches, smartphones, computer tablets, laptop computers).

As has been demonstrated, the present invention may comprise a thermoelectric generator which can provide simultaneous cooling of a heat source. The novel aspect of this invention is preferably the integration of piezoelectric elements such as beams and membranes into a pulsating heat pipe heat exchanger. As a result of this, when the pulsating heat pipe is operating in its oscillating flow regime, the fluctuating pressure and surface tension forces, caused by the unsteady two-phase fluid dynamics in its volume, preferably result in a time dependent strain of the piezoelectric elements, thus preferably generating an electrical voltage which can be harvested for reuse.

In effect, the inputted thermal energy is preferably converted to kinetic energy of the two-phase fluid, which may then interact mechanically with the piezoelectric elements to generate electrical energy. For example, the driving heat source may be either waste heat generated by the attached operating device or from the ambient. Sources include combustion, chemical reactions, mechanical friction, incident radiation, Joule heating of electronics, or heat generated from a living being, for example a mammal.

Preferably, the described embodiments provide a passive sealed device with no moving parts, thus preferably implying a reliable low maintenance operation. The devices of the invention may be manufactured as thin compact low-weight units which can be easily integrated into systems. Furthermore, due to the nature of pulsating heat pipes, the devices of the invention may preferably be used at any orientation and in low gravity applications. Therefore, the present invention is well suited for simultaneous energy harvesting and cooling applications where autonomous long-term operation of the attached system is desired. The electrical energy can be either used directly to power subsystems or stored for later use.

Applications of the described invention include, for example, mobile and fixed electronics, wireless devices, battery-dependent electronic devices in general, civil engineering and architecture, autonomous distributed wireless sensor networks, internet of things, macro and microelectromechanical systems, implantable and wearable electronics, macro and micro-reactors, actuators, and process control systems.

While certain of the preferred embodiments of the present invention have been described and specifically exemplified above, it is not intended that the invention be limited to such embodiments. Various modifications may be made thereto without departing from the scope and spirit of the present invention, as set forth in the following claims.

**Claims**

1.  A device (1, 10, 100) comprising a lumen (5) and a fluid (2) arranged in said lumen (5) so as to be able to circulate and/or oscillate, and so as to, upon circulation and/or oscillation, exchange heat, wherein said device (1) further comprises an electricity generating element (3), which is arranged so as to generate electricity upon said circulation and/or oscillation.

2.  The device (1, 10, 100) of claim 1, which comprises fluid guiding and/or restricting elements (4) providing inner surfaces in said device (1) and/or of said lumen (5), which fluid guiding and/or restricting elements (4) are preferably arranged such that a surface tension acting upon said fluid (2) is larger than the force of gravity acting on said fluid (2).

3.  The device (1, 10, 100) of claim 1 or claim 2, wherein said electricity generating element (3) is arranged in said device so as to convert mechanical and/or kinetic energy of said circulating and/or oscillating fluid (2) into electric energy.

4.  The device (1, 10, 100) of claim 1 or claim 2, wherein said electricity generating element (3) is a piezoelectric element (3).

5.  The device (1, 10, 100) of any one of the preceding claims, which is a heat exchanger, preferably a pulsating heat pipe heat exchanger.

6.  The device (1, 10, 100) of any one of the preceding claims, in which said fluid (2) is arranged to be in contact with said electricity generating element (3).

7.  The device (1, 10, 100) of any one of the preceding claims, in which said electricity generating element (3) provides inner surfaces of the device (1) and/or contact surfaces of said liquid (2).

8.  The device (1, 10, 100) of any one of the preceding claims, wherein said fluid (2) is present as a two-phase fluid (2) comprising preferably a liquid phase (6) and a gaseous phase (7).

9.  The device (1, 10, 100) of any one of the preceding claims, wherein said electricity generating element (3) forms and/or is part of a fluid channelling element (4).

10. The device (1, 10, 100) of any one of the preceding claims, which comprises at least a first zone or heating zone (8) and a second zone or cooling zone (9), wherein said fluid (2) is arranged in said device so as to circulate and/or oscillate and to favour heat exchange between said first and second zones (8, 9).

11. The device (1, 10, 100) of any one of the preceding claims, wherein said electric energy generating and/or piezoelectric element (3) is in the form of one or more beams (11, 12, 13) extending in said device and/or of a cover membrane (25) providing a lateral, top or bottom cover and/or surface of the lumen (5).

12. Use of an electricity generating element (3) in a heat exchanger (1, 10, 100).

13. The use of claim 12, wherein said electricity generating element (3) is a piezoelectric element (3).

14. The use of claim 12 or 13, wherein said heat exchanger (1, 10, 100) is a pulsating heat pipe (PHP).

15. A method for generating electric energy from thermal energy, the method comprising the steps of:

    - providing an electricity generating element (3) in a heat exchanger (1, 10, 100); and,
- generating electricity by converting kinetic energy of a circulating and/or oscillating fluid (2) of said heat exchanger into electric current and/or a voltage gradient.

**Figure 1 A**

**Figure 1 B**

**Figure 2 A**

**Figure 2 B**

**Figure 3**

**Figure 4**

Europäisches
Patentamt

European
Patent Office

Office européen
des brevets

# EUROPEAN SEARCH REPORT

Application Number

EP 16 20 2050

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 442 372 A (ROBERTS WALTER M [US]) 10 April 1984 (1984-04-10) * column 2, lines 11-68; figure 1 * ----- | 1-10,12, 13,15 | INV. H02N2/18 F28D15/02 |
| X | US 2011/235277 A1 (JANG YUNG-LI [TW] ET AL) 29 September 2011 (2011-09-29) | 1-13,15 | |
| Y | * paragraphs [0016] - [0022]; figures 1-3 * ----- | 14 | |
| Y | US 2003/037910 A1 (SMYRNOV GENRIKH [US]) 27 February 2003 (2003-02-27) * paragraphs [0026] - [0059]; figures 1,2 * ----- | 14 | |
| A,D | HAN ET AL.: "Review of the development of pulsating heat pipe for heat dissipation", RENEWABLE AND SUSTAINABLE ENERGY REVIEWS, vol. 59, 22 January 2016 (2016-01-22), pages 692-709, XP29429611, * the whole document * ----- | 1 | |
| X | US 2015/001990 A1 (OLLIER EMMANUEL [FR] ET AL) 1 January 2015 (2015-01-01) * paragraphs [0046] - [0074]; figure 1 * ----- | 1-8, 10-13,15 | TECHNICAL FIELDS SEARCHED (IPC) H02N F28D |
| X | US 2014/174085 A1 (KARE JORDIN T [US] ET AL) 26 June 2014 (2014-06-26) * paragraphs [0069] - [0088]; figures 1-4 * ----- | 1-10,12, 13,15 | |

The present search report has been drawn up for all claims

| Place of search | Date of completion of the search | Examiner |
|---|---|---|
| Munich | 30 May 2017 | Steiner, Markus |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 20 2050

This annex lists the patent family members relating to the patent documents cited in the above-mentioned European search report.
The members are as contained in the European Patent Office EDP file on
The European Patent Office is in no way liable for these particulars which are merely given for the purpose of information.

30-05-2017

| Patent document cited in search report | | Publication date | Patent family member(s) | | Publication date |
|---|---|---|---|---|---|
| US 4442372 | A | 10-04-1984 | NONE | | |
| US 2011235277 | A1 | 29-09-2011 | TW | 201132920 A | 01-10-2011 |
| | | | US | 2011235277 A1 | 29-09-2011 |
| US 2003037910 | A1 | 27-02-2003 | NONE | | |
| US 2015001990 | A1 | 01-01-2015 | CN | 104145414 A | 12-11-2014 |
| | | | EP | 2815498 A1 | 24-12-2014 |
| | | | FR | 2986908 A1 | 16-08-2013 |
| | | | US | 2015001990 A1 | 01-01-2015 |
| | | | WO | 2013120869 A1 | 22-08-2013 |
| US 2014174085 | A1 | 26-06-2014 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5219020 A

**Non-patent literature cited in the description**

- *Renewable and Sustainable Energy Reviews,* 2016, vol. 59, 692-709